# EUROPÄISCHE PATENTANMELDUNG

(11) **EP 1 394 425 A2**
(43) Veröffentlichungstag der Anmeldung: **03.03.2004**
(21) Anmeldenummer: 03014087.5
(22) Anmeldetag: 23.06.2003
(51) Int. Cl.: F16C 13/00

(54) **Biegeausgleichswalze**

(30) Priorität: 26.08.2002 DE 10239096
(71) Anmelder: Voith Paper Patent GmbH, 89522 Heidenheim (DE)
(72) Erfinder: Schnyder, Eugen, 5622 Waltenschwil (CH); Gasser, Egon, 8409 Winterthur (CH)
(74) Vertreter: Manitz, Finsterwald & Partner GbR

(57) **Zusammenfassung**

Eine Walze (10), insbesondere Biegeausgleichswalze, umfasst einen umlaufenden Walzenmantel (12), der im Bereich seiner beiden Enden jeweils über ein abgedichtetes Lager (20) drehbar gelagert ist. Dabei ist axial außerhalb des durch die beiden Lager (20) definierten Innenbereichs sowie von diesem Innenbereich aus betrachtet axial hinter der axial äußersten Dichtung wenigstens eines Lagers ein Auffangbehälter (22) für aus dem jeweiligen Lager austretendes Lecköl vorgesehen.

## Beschreibung

Die Erfindung betrifft eine Walze, insbesondere Biegeausgleichswalze, mit einem umlaufenden Walzenmantel, der im Bereich seiner beiden Enden jeweils über ein abgedichtetes Lager drehbar gelagert ist.

Insbesondere in dem Fall, dass unterhalb der Walzen, insbesondere Biegeausgleichswalzen, kein Bauraum zur Verfügung steht, kommt es beim Auffangen und Ableiten von Lecköl aus den Lagern zu Problemen.

Der Erfindung liegt die Aufgabe zugrunde, eine verbesserte Walze der eingangs genannten Art zu schaffen, bei der die oben erwähnten Probleme beseitigt sind.

Diese Aufgabe wird erfindungsgemäß dadurch gelöst, dass axial außerhalb des durch die beiden Lager definierten Innenenbereichs sowie von diesem Innenbereich aus betrachtet axial hinter der axial äußersten Dichtung wenigstens eines Lagers ein Auffangbehälter für aus dem jeweiligen Lager austretendes Lecköl vorgesehen ist.

Dabei sind vorzugsweise Mittel vorgesehen, um zumindest einen Teil des im Auffangbehälter aufgefangenen Lecköls in das Walzeninnere zurückzuführen. Die bisher im Zusammenhang mit dem Auffangen und Ableiten des Lecköls auftretenden Probleme sind damit beseitigt.

Die Rückführmittel können wenigstens eine Pumpe umfassen.

Bei einer bevorzugten praktischen Ausführungsform der erfindungsgemäßen Walze ist über die Rückführmittel Lecköl aus dem Auffangbehälter in Abhängigkeit vom jeweiligen Füllstand des Auffangbehälters in das Walzeninnere zurückführbar. Vorteilhaft wird also ein Leckölauffangbehälter hinter der Lagerdichtung angebracht und von Zeit zu Zeit, je nach Füllstand, das Lecköl zum Beispiel mit einer kleinen Pumpe zurück in das Walzeninnere befördert.

Der Auffangbehälter kann zweckmäßigerweise direkt an die betreffende Lagerpartie gekoppelt und/oder in diese integriert sein.

Gemäß einer zweckmäßigen Ausführungsform ist ein an der Walze angeordneter Spritzschutz als Auffangbehälter vorgesehen.

Die Rückführung von Lecköl aus dem Auffangbehälter in das Walzeninnere kann insbesondere automatisch erfolgen. Dabei erfolgt eine solche Rückführung von Lecköl vorzugsweise in vorgebbaren zeitlichen Intervallen.

Gemäß einer vorteilhaften Ausführungsform erfolgt die Rückführung von Lecköl aus dem Auffangbehälter in das Walzeninnere mittels Fremdenergie. Dabei kann das Lecköl beispielsweise mittels Pressluft rückgeführt werden.

Von Vorteil ist überdies, wenn zur Rückführung von Lecköl aus dem Auffangbehälter in das Walzeninnere eine mit einem Filter versehene Rückführleitung vorgesehen ist. Es kann also zweckmäßigerweise ein entsprechendes Filter in die betreffende Rückführleitung installiert sein.

Die Walze kann beispielsweise als Biegeausgleichswalze mit einem den umlaufenden Walzenmantel axial durchsetzenden drehfesten Joch und zwischen dem Joch und dem Walzenmantel angeordneten Stützelementen ausgeführt sein.

Es können insbesondere hydraulische Stützelemente vorgesehen sein, die zweckmäßigerweise mit Drucköl beaufschlagbar sind.

Die Stützelemente können insbesondere hydrostatisch und/oder hydrodynamisch geschmiert sein.

Die erfindungsgemäße Walze ist vorteilhafterweise insbesondere verwendbar in einer Vorrichtung oder Presse zur Herstellung von in einzelne Platten aufteilbaren Faserplattenbahnen, Spanplattenbahnen und/oder dergleichen aus einem lignozellulose- und/oder zellulosehaltige Teilchen und zumindest ein wärmehärtendes Bindemittel enthaltenden Vlies. Denkbar ist hierbei insbesondere eine Verwendung in einer Vorrichtung oder Presse mit einem umlaufenden, mit einer Gegenfläche wie z.B. Presstrommel einen Pressspalt bildenden Pressband, insbesondere Stahlband, sowie mit mehreren in Bahnlaufrichtung aufeinander folgenden Anpresseinheiten, die zumindest teilweise durch eineentsprechende Walze gebildet sein können und durch die das umlaufende Press- bzw. Stahlband im Pressspaltbereich gegen die Presstrommel pressbar ist. Die erfindungsgemäße Walze kann also beispielsweise in einer Vorrichtung oder Presse eingesetzt werden, wie sie in der EP 0 776 742 B1 und DE 42 43 917 C1 beschrieben ist.

Die erfindungsgemäße Walze ist vorteilhafterweise insbesondere zur Herstellung von Faserstoff-, Span-, HDF-, MDF-, LDF- und/oder OSB-Platten verwendbar.

Grundsätzlich ist die erfindungsgemäße Vorrichtung beispielsweise auch in einer Papiermaschine, einem Kalander, einer Druckmaschine oder einer Vorrichtung zur Herstellung von Dekorpapier verwendbar.

Beliebige andere Verwendungen sind denkbar.

Die Erfindung wird im Folgenden anhand eines Ausführungsbeispiels unter Bezugnahme auf die Zeichnung näher erläutert.

Die einzige Figur der Zeichnung zeigt in rein schematischer Darstellung eine Walze 10, wobei es sich im vorliegenden Fall rein beispielhaft um eine Biegeausgleichswalze handelt.

Die Walze 10 ist insbesondere in einer Vorrichtung oder Presse zur Herstellung von Materialbahnen verwendbar, bei denen es sich beispielsweise um in einzelne Platten aufteilbare Faserplattenbahnen, Spanplattenbahnen und/oder dergleichen aus einem lignozellulose- und/oder zellulosehaltige Teilchen und zumindest ein wärmehärtendes Bindemittel enthaltenden Vlies handeln kann. Die Walze 10 ist also beispielsweise verwendbar in einer Vorrichtung oder Presse mit einem umlaufenden, mit einer Gegenfläche wie z.B. einer Presstrommel einen Pressspalt bildenden Pressband, insbesondere Stahlband, sowie mit mehreren in Bahnlaufrichtung aufeinander folgenden Anpresseinheiten, von denen zumindest eine durch eine erfindungsgemäße Walze gebildet sein kann und durch die das umlaufende Press- bzw. Stahlband im Pressspaltbereich gegen die rotierende Presstrommel pressbar ist. Es ist also zum Beispiel eine Anwendung in einer solchen Vorrichtung oder Presse denkbar, wie sie in der EP 0 776 742 B1 und DE 42 43 917 C1 beschrieben ist. Die Walze 10 ist beispielsweise auch zur Herstellung von HDF-, MDF-, LDF- und/oder OSB-Platten verwendbar. Generell ist beispielsweise auch eine Verwendung in einer Papiermaschine, einem Kalander, einer Druckmaschine oder einer Maschine zur Herstellung von Dekorpapier denkbar.

Die hier beispielsweise als Biegeausgleichsweise ausgeführte Walze 10 umfasst einen umlaufenden Walzenmantel 12, ein den Walzenmantel 12 axial durchsetzendes drehfestes Joch 14 sowie zwischen dem Joch 14 und dem Walzenmantel 12 angeordnete Stützelemente 16.

Beim vorliegenden Ausführungsbeispiel sind hydraulische Stützelemente 16 vorgesehen, die über Leitungen 18 insbesondere mit Drucköl beaufschlagbar sind. Dabei können die Stützelemente 16 einzeln oder gruppenweise ansteuerbar sein.

Die Stützelemente 16 können insbesondere hydrostatisch und/oder hydrodynamisch geschmiert sein.

Im Bereich seiner beiden Enden ist der Walzenmantel 12 jeweils über ein abgedichtetes Lager 20 drehbar gelagert. Während der Walzenmantel beim vorliegenden Ausführungsbeispiel endseitig jeweils konzentrisch zum Joch 14 gelagert ist ("K-Walze"), ist grundsätzlich beispielsweise auch eine solche Ausführungsform denkbar, bei der der Walzenmantel 12 in der Pressebene relativ zum Joch 14 verlagerbar ist ("F-Walze", selbsteinstellende Walze).

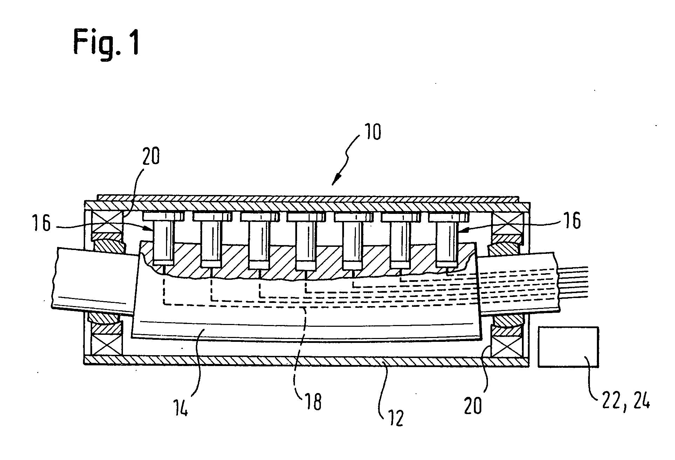

Wie anhand der Fig. 1 zu erkennen ist, ist axial außerhalb des durch die beiden Lager 20 definierten Innenbereichs sowie von diesem Innenbereich aus betrachtet axial hinter der axial äußersten Dichtung wenigstens eines Lagers 20 ein Auffangbehälter 22 für aus dem jeweiligen Lager 20 austretendes Lecköl vorgesehen.

Überdies können Mittel 24 vorgesehen sein, um zumindest einen Teil des im Auffangbehälter 20 aufgefangenen Lecköls in das Walzeninnere zurückzuführen Diese Rückführmittel 24 können beispielsweise wenigstens eine Pumpe umfassen.

Die Rückführmittel 24 können insbesondere so ausgeführt sein, dass Lecköl aus dem Auffangbehälter 22 in Abhängigkeit vom jeweiligen Füllstand des Auffangbehälters 22 in das Walzeninnere zurückführbar ist.

Es kann somit ein Lecköl-Auffangbehälter 22 hinter der Lagerdichtung angebracht sein, um von Zeit zu Zeit, je nach dem Füllstand des Behälters, das Lecköl beispielsweise mittels einer kleinen Pumpe zurück in das Walzeninnere zu befördern. Die bisher beim Auffangen und Ableiten des Lecköls auftretenden Probleme sind damit beseitigt.

Die soeben beschriebene Walze 10 ist vorteilhafterweise insbesondere auch verwendbar in einer Vorrichtung oder Presse zur Herstellung von in einzelne Platten aufteilbaren Faserplattenbahnen, Spanplattenbahnen und/oder dergleichen aus einem lignozellulose- und/oder zellulosehaltige Teilchen und zumindest ein wärmehärtendes Bindemittel enthaltenden Vlies. Sie ist insbesondere verwendbar zur Herstellung von Faserstoff-, Span-, HDF-, MDF-, LDF- und/oder OSB-Platten. Grundsätzlich ist auch eine Verwendung zum Beispiel in einer Papiermaschine, einem Kalander, einer Druckmaschine, einer Maschine zur Herstellung von Dekorpapier und/oder dergleichen denkbar.

### Bezugszeichenliste

- 10: Walze, Biegeausgleichswalze
- 12: Walzerimantel
- 14: Joch
- 16: Stützelement
- 18: Leitung
- 20: Lager
- 22: Auffangbehälter
- 24: Rückführmittel

## Patentansprüche

1. Walze (10), insbesondere Biegeausgleichswalze, mit einem umlaufenden Walzenmantel (12), der im Bereich seiner beiden Enden jeweils über ein abgedichtetes Lager (20) drehbar gelagert ist,
**dadurch gekennzeichnet,**
**dass** axial außerhalb des durch die beiden Lager (20) definierten Innenenbereichs sowie von diesem Innenbereich aus betrachtet axial hinter der axial äußersten Dichtung wenigstens eines Lagers ein Auffangbehälter (22) für aus dem jeweiligen Lager austretendes Lecköl vorgesehen ist.

2. Walze nach Anspruch 1,
**dadurch gekennzeichnet,**
**dass** Mittel (24) vorgesehen sind, um zumindest einen Teil des im Auffangbehälter aufgefangenen Lecköls in das Walzeninnere zurückzuführen.

3. Walze nach Anspruch 2,
**dadurch gekennzeichnet,**
**dass** die Rückführmittel (24) wenigstens eine Pumpe umfassen.

4. Walze nach einem der vorhergehenden Ansprüche,
**dadurch gekennzeichnet,**
**dass** über die Rückführmittel (24) Lecköl aus dem Auffangbehälter (22) in Anhängigkeit vom jeweiligen Füllstand des Auffangbehälters (22) in das Walzeninnere zurückführbar ist.

5. Walze nach einem der vorhergehenden Ansprüche,
**dadurch gekennzeichnet,**
**dass** der Auffangbehälter (22) direkt an die betreffende Lagerpartie gekoppelt und/oder in diese integriert ist.

6. Walze nach einem der vorhergehenden Ansprüche,
**dadurch gekennzeichnet,**
**dass** ein an der Walze (10) angeordneter Spritzschutz als Auffangbehälter (22) vorgesehen ist.

7. Walze nach einem der vorhergehenden Ansprüche,
**dadurch gekennzeichnet,**
**dass** die Rückführung von Lecköl aus dem Auffangbehälter (22) in das Walzeninnere automatisch erfolgt.

8. Walze nach Anspruch 7,
**dadurch gekennzeichnet,**
**dass** die Rückführung von Lecköl in vorgebbaren zeitlichen Intervallen erfolgt.

9. Walze nach einem der vorhergehenden Ansprüche,
**dadurch gekennzeichnet,**
**dass** die Rückführung von Lecköl aus dem Auffangbehälter (22) in das Walzeninnere mittels Fremdenergie erfolgt.

10. Walze nach Anspruch 9,
**dadurch gekennzeichnet,**
**dass** die Rückführung von Lecköl mittels Pressluft erfolgt.

11. Walze nach einem der vorhergehenden Ansprüche,
**dadurch gekennzeichnet,**
**dass** zur Rückführung von Lecköl aus dem Auffangbehälter (22) in das Walzeninnere eine mit einem Filter versehene Rückführleitung vorgesehen ist.

12. Walze nach einem der vorhergehenden Ansprüche,
**dadurch gekennzeichnet,**
**dass** sie als Biegeausgleichswalze mit einem den umlaufenden Walzenmantel (12) axial durchsetzenden drehfesten Joch (14) und zwischen dem Joch (14) und dem Walzenmantel (12) angeordneten Stützelementen (16) ausgeführt ist.

13. Walze nach einem der vorhergehenden Änsprüche,
**dadurch gekennzeichnet,**
**dass** hydraulische Stützelemente (16) vorgesehen sind.

14. Walze nach Anspruch 13,
**dadurch gekennzeichnet,**
**dass** die Stützelemente (16) mit Drucköl beaufschlagbar sind.

15. Walze nach einem der vorhergehenden Ansprüche,
**dadurch gekennzeichnet,**
**dass** die Stützelemente (16) hydrostatisch und/oder hydrodynamisch geschmiert sind.

16. Verwendung der Walze (10) nach einem der vorhergehenden Ansprüche in einer Presse zur Herstellung von in einzelne Platten aufteilbaren Faserplattenbahnen, Spanplattenbahnen und/oder dergleichen aus einem lignozellulose- und/oder zellulosehaltige Teilchen und zumindest ein wärmehärtendes Bindemittel enthaltenden Vlies.

17. Verwendung der Walze (10) nach einem der vorhergehenden Ansprüche in einer Presse zur Herstellung von Faserstoff-, Span-, HDF-, MDF-, LDF- und/oder OSB-Platten.

18. Verwendung der Walze (10) nach einem der vorhergehenden Ansprüche in einer Papiermaschine, einem Kalander, einer Druckmaschine oder einer Maschine zur Herstellung von Dekorpapier.
